# EUROPÄISCHE PATENTANMELDUNG

(11) **EP 3 007 050 A1**
(43) Veröffentlichungstag der Anmeldung: **13.04.2016**
(21) Anmeldenummer: 14188031.0
(22) Anmeldetag: 08.10.2014
(51) Int. Cl.: G06F 3/0482, G06F 3/0486, G06F 3/0481

(54) **Anwenderschnittstelle und Verfahren zur Anpassung einer Menüleiste auf einer Anwenderschnittstelle**

(71) Anmelder: Volkswagen Aktiengesellschaft, 38440 Wolfsburg (DE)
(72) Erfinder: Wengelnik, Heino, 38442 Wolfsburg (DE); Althoff, Frank, 31275 Lehrte (DE); Mejia, Maria, 38106 Braunschweig (DE)

(57) **Zusammenfassung**

Es werden eine Anwenderschnittstelle und ein Verfahren zur Anpassung einer Menüleiste (3) auf einer Anwenderschnittstelle vorgeschlagen. Das Verfahren umfasst die Schritte:
- Anzeigen der Menüleiste (3) auf einer Anzeigeeinheit (1) der Anwenderschnittstelle,
- Empfangen einer ersten Anwendereingabe zur Anzeige einer zweidimensionalen Anordnung (7) in der Menüleiste (3) anzeigbarer Einträge (6) repräsentierend Funktionsumfänge der Anwenderschnittstelle (5),
- Anzeigen der Anordnung (7) auf der Anzeigeeinheit (1),
- Empfangen einer zweiten vordefinierten Anwendereingabe bezüglich eines Eintrags der Menüleiste (3) oder eines Eintrages (6) der Anordnung (7), und im Ansprechen darauf
- Anpassen der Menüleiste (3).

## Beschreibung

### Stand der Technik

Die vorliegende Erfindung betrifft eine Anwenderschnittstelle sowie ein Verfahren zur Anpassung einer Menüleiste auf einer Anwenderschnittstelle. Insbesondere sind Anwenderschnittstellen von Fortbewegungsmitteln adressiert, welche einen umfangreichen Funktionsumfang auf einer optischen Anzeige der Anwenderschnittstelle anbieten.

Im Stand der Technik sind Anwenderschnittstellen für Fahrzeuge und mobile Anwenderendgeräte bekannt, welche einen umfangreichen Funktionsumfang auf einer optischen Anzeige darstellen. Hierbei ist die zur Verfügung stehende Oberfläche stets begrenzt, weshalb der Übersichtlichkeit halber stets nur eine Auswahl der zugreifbaren Funktionen aktuell dargestellt wird. Eine anwenderspezifische Konfiguration der dargestellten Funktionsumfänge ist im Stand der Technik ebenfalls bekannt. Beispielsweise wird in einem aktuellen Anwenderbedienkonzept von Tesla Motors eine starre Menüleiste für den Zugriff auf unterschiedliche Funktionsfamilien verwendet. Selbst eine verschieblich ausgeführte Menüleiste, auf welcher in eindimensionaler Erstreckung unterschiedliche Icons repräsentierend unterschiedliche Funktionsfamilien aufgereiht sind, kann einen schnellen Zugriff auf sämtliche Funktionsfamilien der Anwenderschnittstelle nicht garantieren. Für den Zugriff auf wahlfreie Inhalte des Systems sind daher mitunter eine Vielzahl von Menüpunkten aufzurufen, bis der gewünschte Funktionsumfang eingesehen beziehungsweise bedient werden kann. Auf diese Weise wird insbesondere während der Bedienung eines Fortbewegungsmittels die Aufmerksamkeit des Anwenders vom Verkehrsgeschehen abgelenkt. Es ist daher eine Aufgabe der vorliegenden Erfindung, die Effizienz der Bedienung einer gattungsgemäßen Anwenderschnittstelle zur Erhöhung der Verkehrssicherheit zu verbessern.

### Offenbarung der Erfindung

Die vorstehend genannte Aufgabe wird erfindungsgemäß durch ein Verfahren zur Anpassung einer Menüleiste auf eine Anwenderschnittstelle sowie durch eine entsprechende Anwenderschnittstelle gelöst. In einem ersten Schritt wird eine Menüleiste auf einer Anzeigeeinheit der Anwenderschnittstelle dargestellt. Die Anzeigeeinheit kann beispielsweise ein Bildschirm sein, welcher als Kombiinstrument, als zentrales Informationsdisplay (CID) oder als Touchscreen eines mobilen Anwenderendgerätes ausgestaltet sein kann. Die Menüleiste weist Einträge auf, welche Funktionsumfänge beziehungsweise Funktionsfamilien der Anwenderschnittstelle repräsentieren. In einem weiteren Schritt wird eine erste Anwendereingabe zur Anzeige einer zweidimensionalen Anwendung empfangen, wobei die zweidimensionale Anordnung beispielsweise in Spalten und Zeilen angeordnete Einträge aufweist, welche ebenfalls Funktionsumfänge der Anwenderschnittstelle repräsentieren. Die zweidimensionale Anordnung weist insbesondere eine höhere Anzahl von Einträgen als die Menüleiste auf. Anschließend wird die zweidimensionale Anordnung auf der Anzeigeeinheit angezeigt und eine zweite vordefinierte Anwendereingabe bezüglich eines Eintrages der Menüleiste oder eines Eintrages der Anordnung empfangen. Mit anderen Worten wählt der Anwender entweder einen Eintrag innerhalb der Menüleiste oder einen Eintrag in der zweidimensionalen Anordnung aus, um die in der Menüleiste angeordneten Einträge zu ergänzen oder zu reduzieren. Während die Menüleiste einen schnellen, wahrfreien Zugriff auf die durch sie repräsentierten Funktionsumfänge ermöglicht, ermöglicht die zweidimensionale Anordnung eine wahlfreie Anpassung der in der Menüleiste repräsentierten Funktionsumfänge. Auf diese Weise kann eine wahrfreie, flexible und rasche Anpassung der in der Menüleiste enthaltenen Einträge vorgenommen werden. Im Ergebnis erhöht sich die Fahrsicherheit beziehungsweise die Verkehrssicherheit bei der Verwendung der erfindungsgemäßen Anwenderschnittstelle.

Die Unteransprüche zeigen bevorzugte Weiterbildungen der Erfindung.

Die Menüleiste kann insbesondere entlang eines Randbereiches der Anzeigeeinheit angeordnet sein. Beispielsweise kann sie vertikal am linken beziehungsweise rechten Rand der Anzeigeeinheit oder horizontal am oberen beziehungsweise am unteren Rand der Anzeigeeinheit angeordnet sein, sodass die eindimensionale Reihung in ihr enthaltener Einträge dieselben übereinander oder nebeneinander anordnet. Alternativ ist es auch möglich, die Menüleiste zwischen zwei Bestandteilen eines sogenannten Split-Screens (geteilte Bildschirmdarstellung) anzuordnen und die beiden Bildschirmbereiche durch die Menüleiste optisch gegeneinander abzugrenzen. Bei letzterer Anordnung verringern sich die Wege der Wischgesten, welche zur etwaigen Zuweisung von Inhalten mittels der Einträge der Menüleiste vorzunehmen sind.

Die zweidimensionale Anordnung kann insbesondere die Gesamtheit der in der Menüleiste grundsätzlich anzeigbarer Einträge enthalten. Hierbei kann sich die zweidimensionale Anordnung über eine einzige Bildschirmdarstellung auf der Anzeigeeinheit oder über mehrere Bildschirmdarstellungen erstrecken. Ähnliche Anordnungen sind für die Applikationen in den Betriebssystemen iOS beziehungsweise Android in anderem Zusammenhang bekannt.

Die erste Anwendereingabe kann beispielsweise eine Wischgeste sein, welche in einem Randbereich der Anzeigeeinheit startet und in Richtung eines zentralen Bereiches der Anzeigeeinheit orientiert ist. Insbesondere kann die erste Anwendereingabe auf der Menüleiste starten und diese in Richtung des Zentrums der Anzeigeeinheit bewegen (Drag-Geste). Im Ansprechen darauf wird erfindungsgemäß die zweidimensionale Anordnung zur Konfiguration der Menüleiste angezeigt. Auf diese Weise ist eine intuitive Anpassung der Menüleiste möglich, ohne vordefinierte Konfigurationsmenüs aufrufen zu müssen.

Auf die zweite Anwendereingabe kann als Wischgeste ausgeführt sein, welche auf einem Eintrag der Menüleiste startet und in Richtung der zweidimensionalen Anordnung orientiert ist. Durch eine solche Wischgeste kann die Menüleiste um den entsprechenden Eintrag verringert werden. Insbesondere wird der Eintrag hierbei nicht der zweidimensionalen Anordnung hinzugefügt, da dieser bereits zuvor in der zweidimensionalen Anordnung enthalten war. Alternativ oder zusätzlich kann die zweite Anwendereingabe in Form der Wischgeste auf einem Eintrag der zweidimensionalen Anordnung starten und in Richtung der Menüleiste orientiert sein. Mit anderen Worten wird der innerhalb der zweidimensionalen Anordnung durch die Wischgeste ausgewählte Eintrag der Menüleiste hinzugefügt. Optional endet die zweite Anwendereingabe in dieser Ausgestaltung auf der Menüleiste. In einer alternativen Ausgestaltung kann die Bewegung des angewählten Eintrages entsprechend einer dem Eintrag zugeordneten virtuellen Trägheit fortgesetzt werden, nachdem die Wischgeste vor dem Erreichen der Menüleiste beziehungsweise vor dem Erreichen der zweidimensionalen Anordnung durch Abheben des Fängers von der Anzeigeeinheit unterbrochen wurde. Dies erhöht die Effizienz bei der Bedienung, da kürzere Bewegungen zur Erzielung entsprechender Resultate verwendet werden können.

Die Einträge, welche in eindimensionaler Reihung innerhalb der Menüleiste beziehungsweise in zweidimensionaler (Gitter- oder Grid-) Anordnung enthalten sind, können insbesondere Sinnbilder (englisch "Icons") für die durch sie repräsentierten Funktionsumfänge beziehungsweise Funktionsfamilien umfassen. Dies schließt ein Vorhandensein kurzer Textbestandteile zur Verbesserung der Informationsdichte jedoch nicht aus. Insbesondere sind die Sinnbilder jedoch ähnlich den für Applikationen der bekannten vorgenannten Betriebssysteme für Smartphones nicht zur Anzeige aktueller Daten beziehungsweise für deren Entgegennahme konzipiert. Vielmehr dienen sie der gleichbleibenden Veranschaulichung des Funktionsumfanges und dessen Aufruf beim Bewegen auf konfigurierbare Anzeige-/Bedienelemente innerhalb der grafischen Benutzeroberfläche.

Bevorzugt kann die Menüleiste selbst eingerichtet sein, erst im Ansprechen auf eine Wischgeste eines Anwenders auf der Anzeigeeinheit der Anwenderschnittstelle zu erscheinen. Beispielsweise kann die Menüleiste in einem ersten Zeitpunkt vollständig versteckt oder lediglich durch einen dezenten Hinweis (z. B. "Glow") im Randbereich der Bildschirmdarstellung angekündigt werden und durch eine im Bereich dieses Hinweises startende, in Richtung der Bildschirmmitte orientierte Wischgeste angezeigt werden. Im Ergebnis zeigt sich die eindimensionale Anordnung der Einträge, während eine fortgesetzte Ausführung der Wischgeste oder eine wiederholte Ausführung der Wischgeste zusätzlich zur Menüleiste auch die zweidimensionale Anordnung zu ihrer Anpassung zum Vorschein bringt.

Gemäß einem zweiten Aspekt der vorliegenden Erfindung wird eine Anwenderschnittstelle zur Anpassung einer Menüleiste auf einer Anzeigeeinheit eines Fortbewegungsmittels vorgeschlagen. Diese umfasst die Anzeigeeinheit zum Anzeigen der Menüleiste, wobei die Menüleiste entsprechend den vorstehenden Ausführungen aufgebaut sein kann. Eine Eingabeeinheit ist zum Empfangen von Anwendereingaben vorgesehen. Die Eingabeeinheit kann eine berührungsempfindliche (transparente) Oberfläche der Anzeigeeinheit der Anwenderschnittstelle darstellen. Alternativ oder zusätzlich kann die Eingabeeinheit zur Erfassung und Auswertung frei im Raum ausgeführter (3D-) Gesten umfassen. Für in Form von 3D-Gesten ausgeführte Wischgesten ergeben sich die Start-/Zielpunkte der jeweiligen Wischbewegung für Positionen des Eingabebereiches, welche mit den oben genannten Positionen auf der Anzeigeeinheit korrespondieren. Eine Auswerteeinheit ist zum Auswerten von Anwendereingaben vorgesehen und kann einen programmierbaren Prozessor, einen Controller o.ä. umfassen. Die Anzeigeeinheit ist eingerichtet, im Ansprechen auf eine erste Anwendereingabe eine zweidimensionale Anordnung in der Menüleiste anzeigbarer Einträge anzuzeigen. Im Ansprechen auf eine zweite vordefinierte Anwendereingabe bezüglich eines Eintrages der Menüleiste oder eines Eintrages der Anordnung zeigt die Anzeigeeinheit eine entsprechend angepasste (um einen Eintrag reduzierte beziehungsweise ergänzte) Menüleiste an.

Die Merkmale, Merkmalskombinationen und die sich aus diesen ergebenden Vorteile entsprechen den in Verbindung mit dem erstgenannten Aspekt der vorliegenden Erfindung gemachten Ausführungen derart ersichtlich, dass zur Vermeidung von Wiederholungen auf die obenstehende Offenbarung verwiesen wird.

Gemäß einem dritten Aspekt der vorliegenden Erfindung wird ein Anwenderendgerät (z. B. ein Smartphone, ein Tablet-PC oder eine andere mobile Drahtloskommunikationseinrichtung) vorgeschlagen, welche eine Anwenderschnittstelle entsprechend dem zweitgenannten Erfindungsaspekt umfasst. In diesem Fall sind die Einträge in der Menüleiste beziehungsweise in der zweidimensionalen Anordnung stellvertretend für Funktionsumfänge des Anwenderendgerätes.

Gemäß einem vierten Erfindungsaspekt wird ein Computerprogrammprodukt (z.B. ein Datenspeicher) vorgeschlagen, auf welchem Instruktionen gespeichert sind, die einen programmierbaren Prozessor einer Anwenderschnittstelle in die Lage versetzen, die Schritte eines Verfahrens gemäß dem erstgenannten Erfindungsaspekt durchzuführen. Das Computerprogrammprodukt kann als CD, DVD, Blu-ray-Disc, Flash-Speicher, Festplatte, RAM/ROM, Cache etc. ausgestaltet sein.

Gemäß einem fünften Aspekt der vorliegenden Erfindung wird eine Signalfolge repräsentierend Instruktionen vorgeschlagen, welche einen programmierbaren Prozessor einer Anwenderschnittstelle in die Lage versetzen, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Gemäß einem sechsten Aspekt der vorliegenden Erfindung wird ein Fortbewegungsmittel (z. B. ein PKW, ein Transporter, ein LKW, ein Wasser- und/oder Luftfahrzeug) vorgeschlagen, welches eine Anwenderschnittstelle gemäß dem zweitgenannten Erfindungsaspekt umfasst. Die Einträge der Menüleiste beziehungsweise der zweidimensionalen Anordnung repräsentieren in diesem Fall Funktionsumfänge des Fortbewegungsmittels.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Übersicht über Komponenten eines Ausführungsbeispiels einer erfindungsgemäßen Anwenderschnittstelle in einem Ausführungsbeispiel eines erfindungsgemäßen Fortbewegungsmittels;
- Figur 2: eine schematische Ansicht eines Ausführungsbeispiels einer erfindungsgemäßen Anwenderschnittstelle in einem Ausführungsbeispiel eines erfindungsgemäßen Anwenderendgerätes;
- Figur 3, 4 und 5: Veranschaulichungen von Bedienschritten und deren Resultat bei der Bedienung einer erfindungsgemäß ausgestalteten Anwenderschnittstelle; und
- Figur 6: ein Flussdiagramm veranschaulichend Schritte eines Ausführungsbeispiels eines erfindungsgemäßen Verfahrens.

### Ausführungsformen der Erfindung

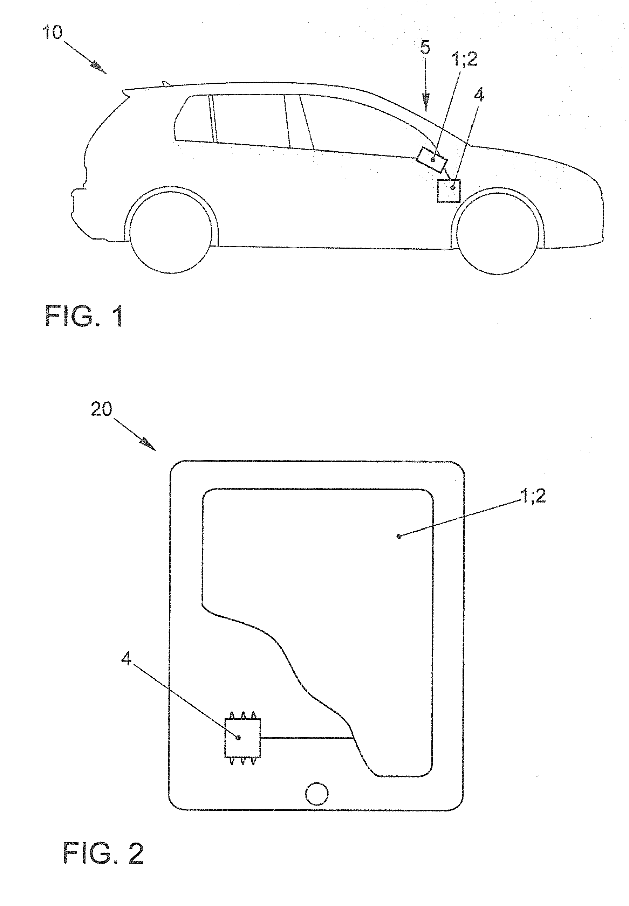

Figur 1 zeigt einen PKW 10 als Fortbewegungsmittel, welcher über eine erfindungsgemäße Anwenderschnittstelle zur Anpassung einer Menüleiste auf einer Anzeigeeinheit 1 aufweist. Die Anzeigeeinheit ist mit einer transparenten, berührungsempfindlichen Oberfläche 2 als Eingabeeinheit versehen und mit einem elektronischen Steuergerät 4 als Auswerteeinheit informationstechnisch verbunden.

Figur 2 zeigt ein Tablet-PC 20 als mobile Drahtloskommunikationseinrichtung, welches einen Touchscreen 1, 2 als Eingabe- beziehungsweise Anzeigeeinheit aufweist. Die über die berührungsempfindliche Oberfläche eingegebenen Anwendergesten werden von einem Mikroprozessor 4 als Auswerteeinheit empfangen und zum Anlass einer angepassten Darstellung der Menüleiste genommen.

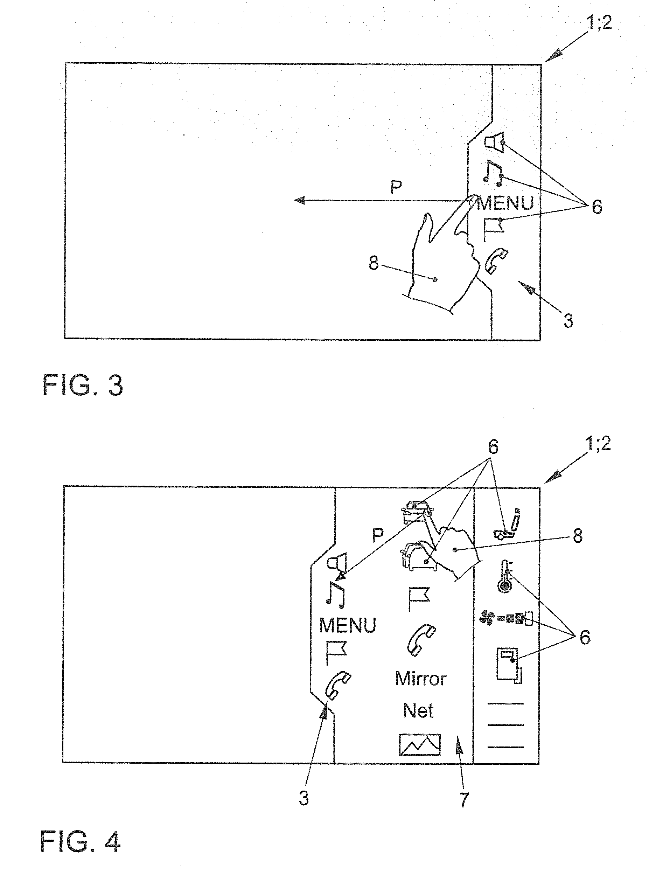

Figur 3 zeigt einen ersten Bedienschritt auf einer Anzeige-/Bedieneinheit 1, 2, bei welcher ein Anwender mit seiner Hand 8 beginnend auf einer am rechten Rand angeordneten Menüleiste 3 durch eine horizontale Wischgeste entlang des Pfeils P in Richtung der Bildschirmmitte einen erfindungsgemäßen Bedienschritt zur Anzeige einer zweidimensionalen Anordnung unternimmt. Die Menüleiste weist zu diesem Zeitpunkt lediglich vier Einträge 6 repräsentierend unterschiedliche Funktionsumfänge auf. Weiter ist auf der Menüleiste der Text "MENU" dargestellt, welcher ein Darstellen der zweidimensionalen Anordnung durch eine Tippgeste ermöglicht.

Figur 4 zeigt das Resultat der in Figur 3 dargestellten Anwenderinteraktion, durch welche rechts neben der Menüleiste 3 zwei weitere Spalten und acht Zeilen unterschiedlicher Einträge 6 zum Vorschein gebracht wurden. Die Einträge 6 der zwei Spalten sind Bestandteil einer zweidimensionalen Anordnung 7 (auch "Grid" genannt), aus welcher die Hand 8 des Anwenders Fahrzeugfunktionen auswählt, um sie durch eine entlang des Pfeils P orientierten Wischgeste der Menüleiste 3 hinzuzufügen.

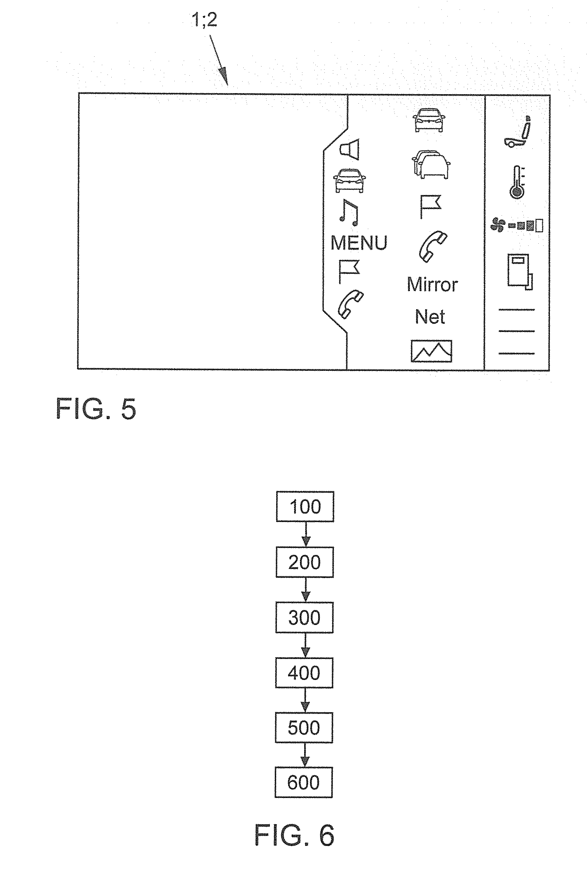

Figur 5 zeigt das Resultat des in Figur 4 veranschaulichten Bedienschrittes. Die Menüleiste 3 weist nun zusätzlich ein Symbol 6 repräsentierend die Funktionen des Bordcomputers auf. Die zweidimensionale Anordnung 7 weist diesen Eintrag 6 ebenfalls noch immer auf, da sie stets sämtliche, durch die Einträge 6 veranschaulichten Funktionsumfänge des Fortbewegungsmittels bereithalten soll.

Figur 6 zeigt Verfahrensschritte eines Ausführungsbeispieles eines erfindungsgemäßen Verfahrens zur Anpassung einer Menüleiste auf einer Anwenderschnittstelle. In Schritt 100 empfängt die Eingabeeinheit eine Wischgeste eines Anwenders, im Ansprechen worauf in Schritt 200 die Menüleiste auf eine Anzeigeeinheit der Anwenderschnittstelle angezeigt wird. In Schritt 300 empfängt die Eingabeeinheit eine erste Anwendereingabe zur Anzeige einer zweidimensionalen Anordnung in der Menüleiste anzeigbarer Einträge repräsentierend Funktionsumfänge der Anwenderschnittstelle. In Schritt 400 wird die zweidimensionale Anordnung auf der Anzeigeeinheit angezeigt. In Schritt 500 wird eine zweite vordefinierte Anwendereingabe bezüglich eines Eintrages der Menüleiste empfangen, also erfasst und ausgewertet, im Ansprechen worauf in Schritt 600 die Menüleiste um den besagten Eintrag reduziert wird.

Die in der Menüleiste enthaltenen Einträge können als "Link" oder "Short-Cut" verstanden werden, über welche (z. B. mittels Drag-and-Drop-Gesten) frei konfigurierbare Anzeige-/Bedienbereiche (z. B. "Kacheln") konfiguriert werden können. Mit anderen Worten kann über das Hineinziehen der Einträge einer Kachel oder einem anderen Anzeigebereich (Split-Screen o.ä.) der durch den Eintrag repräsentierte Funktionsbereich zugewiesen werden. Nach dem erfolgreichen Zuweisen können die repräsentierten Funktionen durch Anzeige aktueller Daten oder Entgegennahme entsprechender Anwendereingaben verwendet werden. Die Bedienung einer gattungsgemäßen Anwenderschnittstelle wird effizienter gestaltet. Insbesondere ihre Konfiguration erleichtert sich, wodurch die Verkehrssicherheit während der Bedienung weniger als gemäß dem Stand der Technik beeinträchtigt wird.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anzeigeeinheit
- 2: Eingabeeinheit
- 3: Menüleiste
- 4: Auswerteeinheit
- 5: Anwenderschnittstelle
- 6: Einträge
- 7: zweidimensionale Anordnung
- 8: Hand des Anwenders
- 10: PKW
- 20: Tablet-PC
- 100 bis 600: Verfahrensschritte
- P: Pfeil

## Patentansprüche

1. Verfahren zur Anpassung einer Menüleiste (3) auf einer Anwenderschnittstelle (5) umfassend die Schritte:
- Anzeigen (200) der Menüleiste (3) auf einer Anzeigeeinheit (1) der Anwenderschnittstelle (5),
- Empfangen (300) einer ersten Anwendereingabe zur Anzeige einer zweidimensionalen Anordnung (7) in der Menüleiste (3) anzeigbarer Einträge (6) repräsentierend Funktionsumfänge der Anwenderschnittstelle (5),
- Anzeigen (400) der Anordnung (7) auf der Anzeigeeinheit (1),
- Empfangen (500) einer zweiten vordefinierten Anwendereingabe bezüglich eines Eintrags der Menüleiste (3) oder eines Eintrages (6) der Anordnung (7), und im Ansprechen darauf
- Anpassen (600) der Menüleiste (3).

2. Verfahren nach Anspruch 1, wobei die Menüleiste (3) eine eindimensionale Reihung von Einträgen (6) ist, welche insbesondere entlang eines Randbereiches der Anzeigeeinheit (1) angeordnet ist.

3. Verfahren nach einem der Ansprüche 1 oder 2, wobei die zweidimensionale Anordnung (7) die Gesamtheit in der Menüleiste (3) anzeigbarer Einträge (6) enthält.

4. Verfahren nach einem der vorstehenden Ansprüche, wobei die erste Anwendereingabe eine Wischgeste ist, welche in einem Randbereich der Anzeigeeinheit (1) startet und in Richtung eines zentralen Bereiches der Anzeigeeinheit (1) orientiert ist.

5. Verfahren nach einem der vorstehenden Ansprüche, wobei die zweite Anwendereingabe eine Wischgeste ist,
- welche auf einem Eintrag (6) der Menüleiste (3) startet und in Richtung der zweidimensionalen Anordnung (7) orientiert ist, und/oder
- welche auf einem Eintrag (6) der zweidimensionalen Anordnung (7) startet und in Richtung der Menüleiste (3) orientiert ist.

6. Verfahren nach einem der vorstehenden Ansprüche, wobei die zweite Anwendereingabe eine Wischgeste ist, welche auf einem Eintrag der Menüleiste (3) startet und in Richtung der zweidimensionalen Anordnung (7) orientiert ist, und das Anpassen der Menüleiste (3) ein Entfernen des Eintrages aus der Menüleiste (3) umfasst.

7. Verfahren nach einem der vorstehenden Ansprüche, wobei die zweite Anwendereingabe eine Wischgeste ist, welche auf einem Eintrag der zweidimensionalen Anordnung (7) startet und in Richtung der Menüleiste (3) orientiert ist, und das Anpassen der Menüleiste (3) ein Hinzufügen des Eintrages (6) zur Menüleiste (3) umfasst.

8. Verfahren nach einem der vorstehenden Ansprüche, wobei die Einträge (6) Sinnbilder sind.

9. Verfahren nach einem der vorstehenden Ansprüche weiter umfassend den Schritt
- Empfangen (100) einer Wischgeste eines Anwenders und im Ansprechen darauf
- Anzeigen (200) der Menüleiste (3) auf einer Anzeigeeinheit (7) der Anwenderschnittstelle (5).

10. Anwenderschnittstelle zur Anpassung einer Menüleiste (3) auf einer Anzeigeeinheit (1) eines Fortbewegungsmittels (10) umfassend
- die Anzeigeeinheit (1) zum Anzeigen der Menüleiste (3) umfassend Einträge (6) repräsentierend Funktionsumfänge der Anwenderschnittstelle (5),
- eine Eingabeeinheit (2) zum Empfangen von Anwendereingaben, und
- eine Auswerteeinheit (4) zum Auswerten von Anwendereingaben, wobei
- die Anzeigeeinheit (1) eingerichtet ist, im Ansprechen auf eine erste Anwendereingabe eine zweidimensionale Anordnung (7) in der Menüleiste (3) anzeigbarer Einträge (6) anzuzeigen,
- im Ansprechen auf eine zweite vordefinierte Anwendereingabe bezüglich eines Eintrags der Menüleiste (3) oder eines Eintrages (6) der Anordnung eine angepasste Menüleiste (6) anzuzeigen.

11. Anwenderschnittstelle nach Anspruch 10, welche weiter eingerichtet ist, ein Verfahren gemäß einem der vorstehenden Ansprüche 1 bis 9 auszuführen.

12. Anwenderendgerät, insbesondere mobile Drahtloskommunikationseinrichtung, umfassend eine Anwenderschnittstelle (5) nach einem der vorstehenden Ansprüche 10 oder 11, wobei die Einträge (6) Funktionsumfänge des Anwenderendgerätes (20) repräsentieren.

13. Computerprogrammprodukt umfassend Instruktionen, welche, wenn Sie auf einer Auswerteeinheit (4) einer Anwenderschnittstelle (1) nach einem der Ansprüche 10 oder 11 ausgeführt werden, die Auswerteeinheit (4) veranlassen, die Schritte eines Verfahrens nach einem der Ansprüche 1 bis 9 durchzuführen.

14. Signalfolge repräsentierend Instruktionen, welche, wenn Sie auf einer Auswerteeinheit (4) einer Anwenderschnittstelle (1) nach einem der Ansprüche 10 oder 11 ausgeführt werden, die Auswerteeinheit (4) veranlassen, die Schritte eines Verfahrens nach einem der Ansprüche 1 bis 9 durchzuführen.

15. Fortbewegungsmittel umfassend eine Anwenderschnittstelle (5) nach einem der vorstehenden Ansprüche 10 oder 11, wobei die Einträge (5) Funktionsumfänge des Fortbewegungsmittels (10) repräsentieren.

## Geänderte Patentansprüche

### Geänderte Patentansprüche gemäss Regel 137(2) EPÜ.

1. Verfahren zur Anpassung einer Menüleiste (3) auf einer Anwenderschnittstelle (5) umfassend die Schritte:
- Anzeigen (200) der Menüleiste (3) auf einer Anzeigeeinheit (1) der Anwenderschnittstelle (5), anschließend
- Empfangen (300) einer ersten Anwendereingabe zur Anzeige einer zweidimensionalen, sich über mehrere Bildschirmdarstellungen erstreckenden Anordnung (7) in der Menüleiste (3) anzeigbarer Einträge (6) repräsentierend Funktionsumfänge der Anwenderschnittstelle (5),
- Anzeigen (400) der Anordnung (7) auf der Anzeigeeinheit (1),
- Empfangen (500) einer zweiten vordefinierten Anwendereingabe bezüglich eines Eintrags der Menüleiste (3) oder eines Eintrages (6) der Anordnung (7), und im Ansprechen darauf
- Anpassen (600) der Menüleiste (3).

2. Verfahren nach Anspruch 1, wobei die Menüleiste (3) eine eindimensionale Reihung von Einträgen (6) ist, welche insbesondere entlang eines Randbereiches der Anzeigeeinheit (1) angeordnet ist.

3. Verfahren nach einem der Ansprüche 1 oder 2, wobei die zweidimensionale Anordnung (7) die Gesamtheit in der Menüleiste (3) anzeigbarer Einträge (6) enthält.

4. Verfahren nach einem der vorstehenden Ansprüche, wobei die erste Anwendereingabe eine Wischgeste ist, welche in einem Randbereich der Anzeigeeinheit (1) startet und in Richtung eines zentralen Bereiches der Anzeigeeinheit (1) orientiert ist.

5. Verfahren nach einem der vorstehenden Ansprüche, wobei die zweite Anwendereingabe eine Wischgeste ist,
- welche auf einem Eintrag (6) der Menüleiste (3) startet und in Richtung der zweidimensionalen Anordnung (7) orientiert ist, und/oder
- welche auf einem Eintrag (6) der zweidimensionalen Anordnung (7) startet und in Richtung der Menüleiste (3) orientiert ist.

6. Verfahren nach einem der vorstehenden Ansprüche, wobei die zweite Anwendereingabe eine Wischgeste ist, welche auf einem Eintrag der Menüleiste (3) startet und in Richtung der zweidimensionalen Anordnung (7) orientiert ist, und das Anpassen der Menüleiste (3) ein Entfernen des Eintrages aus der Menüleiste (3) umfasst.

7. Verfahren nach einem der vorstehenden Ansprüche, wobei die zweite Anwendereingabe eine Wischgeste ist, welche auf einem Eintrag der zweidimensionalen Anordnung (7) startet und in Richtung der Menüleiste (3) orientiert ist, und das Anpassen der Menüleiste (3) ein Hinzufügen des Eintrages (6) zur Menüleiste (3) umfasst.

8. Verfahren nach einem der vorstehenden Ansprüche, wobei die Einträge (6) Sinnbilder sind.

9. Verfahren nach einem der vorstehenden Ansprüche weiter umfassend den Schritt
- Empfangen (100) einer Wischgeste eines Anwenders und im Ansprechen darauf
- Anzeigen (200) der Menüleiste (3) auf einer Anzeigeeinheit (7) der Anwenderschnittstelle (5).

10. Anwenderschnittstelle zur Anpassung einer Menüleiste (3) auf einer Anzeigeeinheit (1) eines Fortbewegungsmittels (10) umfassend
- die Anzeigeeinheit (1) zum Anzeigen der Menüleiste (3) umfassend Einträge (6) repräsentierend Funktionsumfänge der Anwenderschnittstelle (5),
- eine Eingabeeinheit (2) zum Empfangen von Anwendereingaben, und
- eine Auswerteeinheit (4) zum Auswerten von Anwendereingaben, wobei
- die Anzeigeeinheit (1) eingerichtet ist, im Ansprechen auf eine erste Anwendereingabe eine zweidimensionale, sich über mehrere Bildschirmdarstellungen erstreckenden Anordnung (7) in der Menüleiste (3) anzeigbarer Einträge (6) anzuzeigen,
- im Ansprechen auf eine zweite vordefinierte Anwendereingabe bezüglich eines Eintrags der Menüleiste (3) oder eines Eintrages (6) der Anordnung eine angepasste Menüleiste (6) anzuzeigen.

11. Anwenderschnittstelle nach Anspruch 10, welche weiter eingerichtet ist, ein Verfahren gemäß einem der vorstehenden Ansprüche 1 bis 9 auszuführen.

12. Anwenderendgerät, insbesondere mobile Drahtloskommunikationseinrichtung, umfassend eine Anwenderschnittstelle (5) nach einem der vorstehenden Ansprüche 10 oder 11, wobei die Einträge (6) Funktionsumfänge des Anwenderendgerätes (20) repräsentieren.

13. Computerprogrammprodukt umfassend Instruktionen, welche, wenn Sie auf einer Auswerteeinheit (4) einer Anwenderschnittstelle (1) nach einem der Ansprüche 10 oder 11 ausgeführt werden, die Auswerteeinheit (4) veranlassen, die Schritte eines Verfahrens nach einem der Ansprüche 1 bis 9 durchzuführen.

14. Signalfolge repräsentierend Instruktionen, welche, wenn Sie auf einer Auswerteeinheit (4) einer Anwenderschnittstelle (1) nach einem der Ansprüche 10 oder 11 ausgeführt werden, die Auswerteeinheit (4) veranlassen, die Schritte eines Verfahrens nach einem der Ansprüche 1 bis 9 durchzuführen.

15. Fortbewegungsmittel umfassend eine Anwenderschnittstelle (5) nach einem der vorstehenden Ansprüche 10 oder 11, wobei die Einträge (5) Funktionsumfänge des Fortbewegungsmittels (10) repräsentieren.
